# EUROPÄISCHE PATENTSCHRIFT

(11) **EP 3 296 606 B1**
(45) Veröffentlichungstag und Bekanntmachung des Hinweises auf die Patenterteilung: **19.06.2019**
(21) Anmeldenummer: 17185720.4
(22) Anmeldetag: 10.08.2017
(51) Int. Cl.: F16L 37/244, F16L 41/10, F16L 47/08, F16L 41/08

(54) **ANSCHLUSSVORRICHTUNG**
CONNECTION DEVICE
DISPOSITIF DE RACCORDEMENT

(30) Priorität: 16.09.2016 DE 202016105166 U
(43) Veröffentlichungstag der Anmeldung: 21.03.2018
(73) Patentinhaber: REHAU AG + Co, 95111 Rehau (DE)
(72) Erfinder: Sieber, Jürgen, 91074 Herzogenaurach (DE)

(56) Entgegenhaltungen:
- EP-A1- 1 688 656
- EP-B1- 2 281 137
- DE-U1-202006 005 685

## Beschreibung

Die Erfindung betrifft eine Anschlussvorrichtung für eine Nebenrohrleitung an einer Hauptrohrleitung, einem Schacht oder dergleichen. Des Weiteren betrifft die Erfindung ein Fluidaufnahme-, -speicher- und -leitsystem mit einer Anschlussvorrichtung.

Eine solche Anschlussvorrichtung nach dem Oberbegriff des Anspruchs 1 ist aus der EP 2 281 137 B bekannt. Anschlussvorrichtungen für eine Nebenrohrleitung an einer Hauptrohrleitung, einem Schacht oder dergleichen, sind aus dem Stand der Technik bekannt. Diese sind immer dann notwendig, wenn beispielsweise bei der Erschließung eines neuen Baugebietes eine Nebenrohrleitung an eine dort schon bestehende Hauptrohrleitung oder an einen dort schon bestehenden Schacht oder dergleichen anzuschließen ist.
Hierzu wird in der Wandung der Hauptrohrleitung, des Schachtes oder dergleichen, ein Durchbruch geschaffen und in diesem Durchbruch ein Elastomereinsatz installiert. In dem Elastomereinsatz wird ein Anschlussstutzen fixiert, an den die Nebenrohrleitung anschließbar ist. Auf diese Weise wird eine fluiddichte Verbindung zwischen der Nebenrohrleitung und der Hauptrohrleitung, dem Schacht oder dergleichen, hergestellt. Anschlussvorrichtungen aus dem Stand der Technik sind aufwendig zu installieren. Die vorliegende Erfindung hat sich daher die Aufgabe gestellt, eine Anschlussvorrichtung anzugeben, die in einfacher Weise installierbar ist, und die darüber hinaus eine im Vergleich zu den aus dem Stand der Technik bekannten Anschlussvorrichtungen verbesserte Dichtigkeit aufweist.
Eine weitere Aufgabe der vorliegenden Erfindung ist es, ein Fluidaufnahme-, -speicher und -leitsystem mit einer solchen Anschlussvorrichtung anzugeben.
Die Lösung der ersten Aufgabe, eine Anschlussvorrichtung anzugeben, erfolgt gemäß Anspruch 1.

Es wurde erkannt, dass eine Anschlussvorrichtung für eine Nebenrohrleitung an einer Hauptrohrleitung, einem Schacht oder dergleichen, welche einen Durchbruch in der Wandung aufweist, umfassend einen Elastomereinsatz und einen Anschlussstutzen, der nach Installation des Elastomereinsatzes in den Durchbruch der Wandung der Hauptrohrleitung, des Schachtes oder dergleichen, in diesen bis zum Erreichen einer Endstellung einschraubbar ist und an den die Nebenrohrleitung anschließbar ist, sodass eine fluiddichte Verbindung zwischen der Hauptrohrleitung, dem Schacht oder dergleichen, und der Nebenrohrleitung herstellbar ist, wobei zum Einschrauben des Anschlussstutzens in den Elastomereinsatz ein Außengewinde am Anschlussstutzen und ein Innengewinde am Elastomereinsatz ausgebildet ist, die vorliegende Aufgabe vollständig löst, wenn vorgesehen ist, dass das Außengewinde am Anschlussstutzen und das Innengewinde am Elastomereinsatz als Bajonettgewinde geformt sind, die bei gegenseitigem Eingriff bei einer Drehung um einen Winkel zwischen 12,5° und 45° die Endstellung erreichen und dass der Elastomereinsatz einen Auflagekragen aufweist, der die Form eines Zylindermantelflächenabschnitts besitzt, und dass am Anschlussstutzen ein Endbereich ausgebildet ist, wobei der Endbereich des Anschlussstutzens an seinem Außenumfang einen umlaufenden Vorsprung aufweist, der in der Einschraubendstellung mit einer Dichtfläche des Elastomereinsatzes dichtend in Berührung steht, und dass am Elastomereinsatz ein Haltebereich ausgebildet ist, wobei der Haltebereich des Elastomereinsatzes an seinem Innenumfang wenigstens ein umlaufendes Dichtmittel aufweist, das in der Einschraubendstellung mit einem Dichtabschnitt des Anschlussstutzens dichtend in Berührung steht.

Eine Anschlussvorrichtung mit den vorgenannten Merkmalen löst die vorstehend genannten Aufgaben der Erfindung vollständig, lässt sich in einfacher Weise installieren und bietet eine gegenüber herkömmlichen Vorrichtungen verbesserte Dichtigkeit.

Bei der erfindungsgemäßen Anschlussvorrichtung ist ein Anschlussstutzen in einen Elastomereinsatz, der in einem Durchbruch der Wandung der Hauptrohrleitung, des Schachtes oder dergleichen, installiert ist, eingeschraubt.

Erfindungsgemäß ist vorgesehen, dass das Außengewinde am Anschlussstutzen und das Innengewinde am Elastomereinsatz als Bajonettgewinde geformt sind.

Es kann sich bei der vorliegenden Erfindung als sehr hilfreich erweisen, wenn vorgesehen ist, dass am Elastomereinsatz und am Anschlussstutzen das Bajonettgewinde in Form einer Mehrzahl von Gewindeabschnitten ausgebildet ist, wobei eine Anzahl von 4, 5, 6, 7 oder 8 bevorzugt ist.

Durch das Ausbilden des Bajonettgewindes am Elastomereinsatz und am Anschlussstutzen in Form einer Mehrzahl von Gewindeabschnitten ist es in einfacher Weise möglich, den Anschlussstutzen nach Installation des Elastomereinsatzes im Durchbruch der Wandung des Hauptrohres, des Schachtes oder dergleichen einzuschieben und durch eine Drehung eine Endstellung zu erreichen. In der Endstellung sind der Elastomereinsatz und der Anschlussstutzen fest und fluiddicht miteinander verbunden.

Durch das Vorsehen einer Mehrzahl von Gewindeabschnitten am Bajonettgewinde des Elastomereinsatzes und am Bajonettgewinde des Anschlussstutzens kann eine sehr einfache Installationstechnik realisiert werden. Bei einer gleichen Anzahl Gewindeabschnitten am Elastomereinsatz und am Anschlussstutzen kann in einfacher Weise der Anschlussstutzen derartig in den Elastomereinsatz eingeschoben werden, dass die Gewindeabschnitte des Bajonettgewindes des Anschlussstutzens beim Einschieben derartig positioniert sind, dass diese zwischen den Gewindeabschnitten des Bajonettgewindes des Elastomereinsatzes zu liegen kommen.

Als sehr praktikabel kann sich bei der vorliegenden Erfindung erweisen, wenn vorgesehen ist, dass am Elastomereinsatz und / oder am Anschlussstutzen eine Anschlag ausgebildet ist, der den Einschraubweg des Anschlussstutzens in den Elastomereinsatz begrenzt und die Einschraubendstellung des Anschlussstutzens im Elastomereinsatz definiert.

Durch das Vorsehen, dass am Elastomereinsatz und / oder am Anschlussstutzen ein Anschlag ausgebildet ist, gelingt eine sachgerechte Installation des Anschlussstutzens im Elastomereinsatz ohne Weiteres, da der Einschraubweg des Anschlussstutzens in den Elastomereinsatz auf diese Weise begrenzt ist.
Das bei der Installation tätige Personal kann auf diese Weise eine sichere Installation des Anschlussstutzens im Elastomereinsatz ausführen, da beim Einschrauben des Anschlussstutzens in den Elastomereinsatz durch den Anschlag eine Begrenzung vorgegeben ist, bis zu der der Anschlussstutzen in den Elastomereinsatz einschraubbar ist.
Die Sicherheit hinsichtlich einer ordnungsgemäßen Installation der Anschlussvorrichtung wird dadurch wesentlich verbessert.

Im Rahmen einer Weiterbildung der vorliegenden Erfindung kann sich als sehr hilfreich erweisen, wenn vorgesehen ist, dass das am Haltebereich des Elastomereinsatzes vorgesehene Dichtmittel eine Dichtlippe oder eine Mehrzahl von Dichtlippen, und / oder eine Dichtwulst oder eine Mehrzahl von Dichtwülsten ist.

Durch das Vorsehen einer Dichtlippe oder einer Mehrzahl von Dichtlippen, und / oder einer Dichtwulst oder einer Mehrzahl von Dichtwülsten als Dichtmittel am Haltebereich des Elastomereinsatzes kann eine besonders gute Abdichtung zwischen dem Haltebereich des Elastomereinsatzes und dem Dichtabschnitt des Anschlussstutzens hergestellt werden. Dadurch wird eine hohe Sicherheit gegen unerwünscht hindurchtretende Flüssigkeit gewährleistet.

In einer weiteren Fortbildung der vorliegenden Erfindung kann sich als äußerst günstig erweisen, wenn vorgesehen ist, dass am Endbereich des Anschlussstutzens der dort vorgesehene umlaufende Vorsprung als Wulst oder als Kante ausgebildet ist. Durch das Vorsehen eines als Wulst oder als Kante ausgebildeten umlaufenden Vorsprungs am Endbereich des Anschlussstutzens kann eine sehr gute Dichtheit der Anschlussvorrichtung in diesem Bereich zwischen dem Anschlussstutzen und dem Elastomereinsatz sichergestellt werden.

Als ganz besonders vorteilhaft kann sich im Rahmen der vorliegenden Erfindung erweisen, wenn vorgesehen ist, dass an der Außenoberfläche und / oder am Haltebereich des Elastomereinsatzes wenigstens eine Nut vorgesehen ist, in der ein quellfähiges Dichtungsmaterial aufgenommen ist.

Durch das Vorsehen einer Nut an der Außenoberfläche und / oder am Haltebereich des Elastomereinsatzes, in der ein quellfähiges Dichtungsmaterial aufgenommen ist, wird die vorliegende Erfindung weiter verbessert.
Bei der erfindungsgemäßen Anschlussvorrichtung kann damit gewährleistet werden, dass im Bereich zwischen der Außenoberfläche des Elastomereinsatzes und der Außenoberfläche der Wandung des Hauptrohres im Bereich des Durchbruchs, an dem die Außenoberfläche des Elastomereinsatzes anliegt, im Falle eines Eintritts von Wasser das quellfähige Dichtungsmaterial quillt, damit sein Volumen vergrößert und so nachträglich abdichtet.

In gleicher Weise kann das quellfähige Dichtungsmaterial am Elastomereinsatz in einer Nut am Haltebereich wirken. Sollte in den Spalt zwischen Elastomereinsatz und Anschlussstutzen Wasser eindringen, so kann das in einer Nut am Haltebereich des Elastomereinsatzes angeordnete quellfähige Dichtungsmittel quellen, sein Volumen vergrößern und damit gegenüber dem Dichtabschnitt des Anschlussstutzens abdichtend wirken und die Dichtheit in diesem Bereich ebenso gewährleisten.

Es versteht sich von selbst, dass nicht nur eine Nut mit einem quellfähigen Dichtungsmaterial vorgesehen sein kann, sondern auch zwei, drei oder mehrere.

Als ganz besonders hilfreich kann sich bei der vorliegenden Erfindung ergeben, wenn vorgesehen ist, dass am Elastomereinsatz und am Anschlussstutzen Markierungen oder Informationselemente vorgesehen sind, die Informationen bereitstellen, wie der Elastomereinsatz und der Anschlussstutzen zusammenzufügen und durch Schrauben zu verbinden sind und ob die Einschraubendstellung beim Schrauben erreicht ist.

Durch das Vorstehen von Markierungen oder Informationselementen am Elastomereinsatz und am Anschlussstutzen kann zunächst eine Information für das installierende Personal bereitgestellt werden, wie der Anschlussstutzen gegenüber dem Elastomereinsatz anzuordnen ist, damit die Gewindeabschnitte des Anschlussstutzens in die Freiräume zwischen den Gewindeabschnitten des Elastomereinsatzes eindringen können, wenn der Anschlussstutzen in den Elastomereinsatz eingeschoben wird.

Weitere Markierungen oder Informationselemente am Elastomereinsatz und am Anschlussstutzen können dem installierenden Personal Informationen übermitteln, in welche Richtung der Anschlussstutzen zu drehen ist, und um welchen Winkelbetrag dies zu geschehen hat, bis die Einschraubendstellung beim Schrauben erreicht ist.

Auf diese Weise kann eine ganz besonders sichere Installation der Anschlussvorrichtung am Hauptrohr, am Schacht oder dergleichen, erfolgen.

Es kann sich bei der vorliegenden Erfindung als überaus vorteilhaft ergeben, wenn vorgesehen ist, dass der Elastomereinsatz ein Elastomer enthält oder aus einem Elastomer besteht, wobei das Elastomer ausgewählt ist aus einem Gummi, einem Kautschuk, einem Thermoplastischen Elastomer (TPE), einem Styrol-Butadien-Kautschuk (SBR), einem Nitril-Butadien-Kautschuk (NBR), oder einem Ethylen-Propylen-Dien-Kautschuk (EPDM).

Insbesondere ist es mit diesen Elastomeren sehr einfach, durch verschiedene Formgebungsverfahren einen Elastomereinsatz in der gewünschten Ausführung herzustellen.

In vorteilhafter Weise kann auch vorgesehen sein, dass nur Teile oder Abschnitte des Elastomereinsatzes aus einem Elastomer gemäß vorstehender Aufzählung ausgebildet sind.

Es ist auch möglich, dass ein Elastomereinsatz verschiedene Elastomere aufweist, um beispielsweise in den Bereichen, die dichtend wirken wollen, ein besonders weiches Elastomer, also ein Elastomer mit einem besonders niedrigen E-Modul, vorzusehen, während andere Bereiche, insbesondere solche, in denen Kräfte aufzunehmen oder durch die Kräfte zu übertragen sind, beispielsweise aus einem härteren Elastomermaterial, also einem Material mit höherem E-Modul, auszubilden.

Bei der erfindungsgemäßen Anschlussvorrichtung kann es sich bewähren, wenn vorgesehen ist, dass der Anschlussstutzen ein Polymermaterial enthält oder aus einem Polymermaterial besteht, wobei das Polymermaterial bevorzugt ein Thermoplast ist, besonders bevorzugt ein Polyolefin oder eine Polyvinylchlorid oder ein Polyamid, und ganz besonders bevorzugt ein Polypropylen, ein Polyethylen oder ein Polybutylen oder ein Copolymeres oder eine Mischzusammensetzung der Vorgenannten.

Die vorstehend aufgeführten Polymermaterialien sind langlebig, inert, stabil, weisen ein geringes Gewicht auf, sind einfach handhabbar, leicht installierbar und können kostengünstig bereitgestellt werden.

Insbesondere ist es mit diesen Polymermaterialien sehr einfach, durch verschiedene Formgebungsverfahren einen Anschlussstutzen in der gewünschten Ausführung herzustellen.

Der Elastomereinsatz und / oder der Anschlussstutzen können in einem Formgebungsverfahren, zum Beispiel in einem Spritzgussverfahren oder einem Pressverfahren oder einem Thermoformverfahren oder einer Kombination der vorgenannten Verfahren hergestellt sein.

Alternativ ist es auch möglich, dass der Elastomereinsatz und / oder der Anschlussstutzen unter Verwendung eines generativen Fertigungsverfahrens, insbesondere einstückig, beispielsweise durch ein 3-D-Druckverfahren, hergestellt sind bzw. ist.

Hierzu können mit Vorteil datenverarbeitungsmaschinenlesbare dreidimensionale Modelle für die Herstellung genutzt werden.

Ein Verfahren zur Erzeugung eines datenverarbeitungsmaschinenlesbaren dreidimensionalen Modells kann in einem Herstellungsverfahren für einen Elastomereinsatz und / oder einen Anschlussstutzen verwendet werden. Hierbei umfasst das Verfahren insbesondere auch die Eingabe von Daten, die einen Elastomereinsatz und / oder einen Anschlussstutzen darstellen, in eine Datenverarbeitungsmaschine und die Nutzung der Daten, um einen Elastomereinsatz und / oder einen Anschlussstutzen als dreidimensionales Modell darzustellen, wobei das dreidimensionale Modell geeignet ist zur Nutzung bei der Herstellung eines Elastomereinsatzes und / oder eines Anschlussstutzens.
Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Elastomereinsatz und / oder einen Anschlussstutzen abgegeben wird und die reflektierte Energie empfangen wird, und wobei ein virtuelles dreidimensionales Modell eines Elastomereinsatzes und / oder eines Anschlussstutzens unter Verwendung einer computer-unterstützten Design-Software erzeugt wird.
Die Aufgabe der vorliegenden Erfindung, ein Fluidaufnahme-, -speicher- und -leitsystem anzugeben, erfährt ihre Lösung gemäß Anspruch 10.
Im Rahmen der vorliegenden Erfindung wurde erkannt, dass ein Fluidaufnahme-, -speicher- und -leitsystem dann in ganz besonderer Weise aufgewertet ist, wenn vorgesehen ist, dass eine Anschlussvorrichtung, wie vorstehend beschrieben, vorgesehen ist.
Die vorliegende Erfindung findet im breiten Umfang Anwendung im Bereich der Abwassertechnik und Regenwasserbewirtschaftung. Die Erfindung kann aber mit großem Vorteil auch in industriellen Anwendungen, in Schwimmbädern, in der Land- und Teichwirtschaft, sowie in anderen Bereichen eingesetzt werden.

Weitere wichtige Merkmale und Vorteile der Erfindung ergeben sich aus den Unteransprüchen, aus der Figur und aus der zugehörigen Figurenbeschreibung.

Die Erfindung wird anhand der beigefügten Figuren wie folgt näher beschrieben:
- Fig. 1: zeigt eine schematische seitliche Ansicht eines Anschlussstutzens;
- Fig. 2: zeigt eine schematische seitliche Ansicht des Anschlussstutzens aus Fig. 1 aus einer anderen Richtung;
- Fig. 3: zeigt eine schematische geschnittene seitliche Ansicht eines Elastomereinsatzes;
- Fig. 4: zeigt eine schematische seitliche Ansicht des Elastomereinsatzes aus Fig. 3;
- Fig. 5: zeigt eine schematische geschnittene seitliche Ansicht eines Details des Elastomereinsatzes aus Fig. 3;
- Fig. 6: zeigt eine schematische Aufsicht auf den Elastomereinsatz aus Fig. 3;
- Fig. 7: zeigt eine schematische seitliche geschnittene Ansicht des Anschlussstutzens, der in den Elastomereinsatz eingesteckt ist;
- Fig. 8: zeigt eine schematische seitliche geschnittene Ansicht der Anschlussvorrichtung.

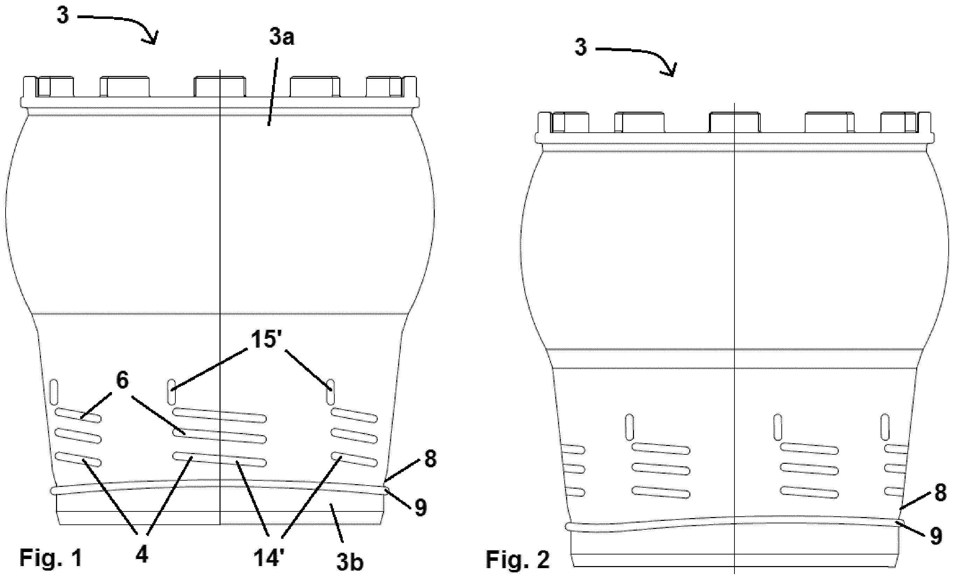

In der Fig. 1 ist in einer schematischen seitlichen Ansicht der Anschlussstutzen 3 gezeigt.
Der Anschlussstutzen 3 ist als Hohlstopfen ausgebildet, er weist ein erstes Ende 3a und ein zweites Ende 3b auf.

Am ersten Ende 3a des Anschlussstutzens 3 ist ein Teil der Wandung als Schraubkrone ausgebildet, dort kann ein Werkzeug angesetzt werden, um den Anschlussstutzen 3 in den Elastomereinsatz 2 einzuschrauben. Am ersten Ende 3a wird nach fertiger Installation der Anschlussvorrichtung 1 am Hauptrohr, am Schacht oder dergleichen, auch die Nebenrohrleitung installiert.

Der Anschlussstutzen 3 kann am Ersten Ende 3a als Muffe oder als Kugelgelenk ausgeformt sein. Es ist damit je nach Auswahl möglich, Nebenrohre aus Steinzeug, Guss (duktil), Polyvinylchlorid oder Polypropylen anzuschließen.

Das zweite Ende 3b wird genutzt, um den Anschlussstutzen 3 in den Elastomereinsatz 2 einzustecken. Etwa ab der Mitte des Anschlussstutzens 3 zwischen dem ersten Ende 3a und dem zweiten Ende 3b ist zum zweiten Ende 3b hin ein konischer Abschnitt an der Außenoberfläche des Anschlussstutzens 3 ausgebildet. In diesem konischen Abschnitt der Außenoberfläche des Anschlussstutzens 3 ist ein Außengewinde 4 ausgebildet, das als Bajonettgewinde 6 in einzelnen Gewindeabschnitten 14' ausgeformt ist. Bei jedem Gewindeabschnitt 14' sind mehrere Gewindegänge des Außengewindes 4 ausgebildet. In der vorliegenden Fig. 1 sind dies drei Gewindegänge. Zwischen den einzelnen Gewindeabschnitten 14' sind in radialer Richtung an der Außenoberfläche des Anschlussstutzens 3 Freiräume vorgesehen, in denen keine Gewindeabschnitte 14', 14" angeordnet sind.
Den Gewindeabschnitten 14' zugeordnet ist jeweils ein Anschlag 15'.

Am Endbereich 8 des Anschlussstutzens 3 ist ein Vorsprung 9 in Form eines Wulstes ausgeformt, der sich entlang des gesamten Außenumfangs des Anschlussstutzens im Bereich des Endbereichs 8 herumzieht.

Der Anschlussstutzen 3 ist hier aus Polypropylen gebildet.

Zwischen dem ersten Ende 3a und dem zweiten Ende 3b des Anschlussstutzens 3 ist ein hier nicht gezeigter Durchgang vorhanden, durch den nach abgeschlossener Installation der Anschlussvorrichtung 1 am Hauptrohr, am Schacht oder dergleichen, nach Anschluss der Nebenrohrleitung Fluid fließen kann.

In der Fig. 2 ist in einer schematische seitliche Ansicht der Anschlussstutzen aus Fig. 1 aus einer anderen Richtung gezeigt.

Die Bezugszeichen entsprechen denen aus Fig. 1.

Die Ansicht gemäß Fig. 2 ist gegenüber der Ansicht von Fig. 2 etwa um 45 ° gedreht.

Es ist leicht erkennbar, dass am Endbereich 8 des Anschlussstutzens 3 ein Vorsprung 9 in Form eines Wulstes ausgeformt ist, der sich entlang des gesamten Außenumfangs des Anschlussstutzens 3 am Endbereich 8 herumzieht.

Die Anordnung des Vorsprungs 9 in Form einer Wulst entlang des gesamten Außenumfangs des Anschlussstutzens 3 am Endbereich 8 repräsentiert einen Zylindermantelflächenabschnitt, der die Form des Zylindermantelflächenabschnitts am Durchbruch im Hauptrohr, am Schacht oder dergleichen, aufweist.

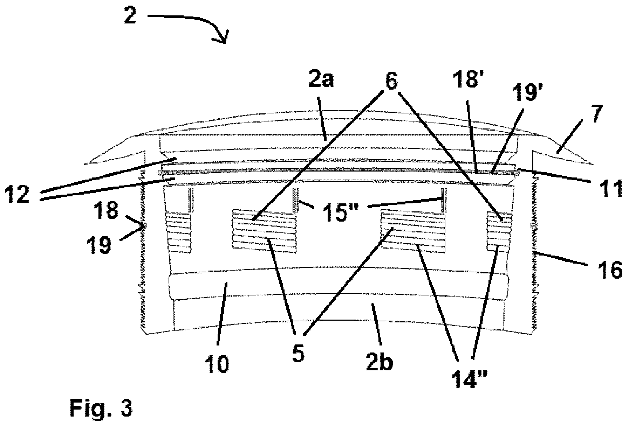

In der Fig. 3 ist eine schematische geschnittene seitliche Ansicht eines Elastomereinsatzes 2 gezeigt.

Der Elastomereinsatz 2 ist als Hohlstopfen ausgebildet, der ein erstes Ende 2a und ein zweites Ende 2b aufweist. Zwischen dem ersten Ende 2a und dem zweiten Ende 2b des Elastomereinsatzes 2 ist ein Durchgang ausgebildet.

Die Wandung des Elastomereinsatzes 2 ist am ersten Ende 2a als Auflagekragen ausgebildet, der sich von einer zentralen Achse des Elastomereinsatzes 2 radial nach außen hin erstreckt. Der Auflagekragen 7 des Elastomereinsatzes 2 ist in vorteilhafter Weise in Form eines Zylindermantelflächenabschnitts ausgebildet, um sich so gut an die Außenoberfläche des Hauptrohres, des Schachtes oder dergleichen, zumindest abschnittsweise, anzupassen und sich bei der Installation dort anzulegen.
Auf diese Weise wird eine besonders sichere Positionierung des Elastomereinsatzes 2 im Durchbruch der Wandung des Hauptrohres, des Schachtes oder dergleichen, erreicht. Durch diese Maßnahme kann wirksam verhindert werden, dass sich der in dem Durchbruch der Wandung des Hauptrohres, des Schachtes oder dergleichen, installierte Elastomereinsatz 2 beim Einschrauben des Anschlussstutzens 3 ungewollt ver- oder mitdreht.

An der Innenoberfläche des Elastomereinsatzes 2 ist ein Innengewinde 5 in Form eines Bajonettgewindes 6 ausgebildet, welches einzelne Gewindeabschnitte 14" aufweist. Die Gewindeabschnitte 14" weisen mehrere Gewindegänge auf, wobei die Anzahl der Gewindegänge eines Gewindeabschnittes 14" des Elastomereinsatzes 2 bevorzugt mit der Anzahl der Gewindegänge eines Gewindeabschnitts 14" des Anschlussstutzens 3 übereinstimmen kann. Zwischen den einzelnen Gewindeabschnitten 14', 14" sind in radialer Richtung an der Innnenoberfläche des Elastomereinsatzes 2 Freiräume vorgesehen, in denen keine Gewindeabschnitte 14" angeordnet sind.

Den Gewindeabschnitten 14" des Elastomereinsatzes 2 sind Anschläge 15" zugeordnet.

An der Innenoberfläche des Elastomereinsatzes 2 ist in einem Haltebereich 11, der nahe am ersten Ende 2a ausgebildet ist, ein Dichtmittel 12 vorgesehen, welches in der Fig. 2 als zwei Dichtlippen, die etwa parallel zueinander entlang des gesamtes Innenumfangs am Haltebereich 11 umlaufend ausgebildet ist.

In einer Nut 18 an der Außenoberfläche 16 des Elastomereinsatzes 2, welche sich entlang des gesamten Außenumfangs 16 erstreckt, ist ein quellfähiges Dichtungsmaterial 19 vorgesehen.

Es ist weiter gezeigt, dass am Haltebereich 11 des Elastomereinsatzes 2 auch eine Nut 18' vorgesehen ist, welche sich entlang des gesamten Innenumfangs am Haltebereich 11 erstreckt, und in der ein quellfähiges Dichtungsmaterial 19' angeordnet ist.
Insbesondere kann vorgesehen sein, dass die Nut 18', welche sich entlang des gesamten Innenumfangs am Haltebereich 11 erstreckt, und in der ein quellfähiges Dichtungsmaterial 19' angeordnet ist, zwischen den zwei Dichtlippen, die etwa parallel zueinander entlang des gesamtes Innenumfangs am Haltebereich 11 verlaufen, ausgebildet ist.

An der Stirnfläche am zweiten Ende 2b des Elastomereinsatzes 2 kann eine Markierung zur Identifizierung des Elastomereinsatzes 2 im verbauten Zusstand aus dem Hauptrohr, dem Schacht oder dergleichen, mit Hilfe eines ferngesteuerten Kontrollgerätes angebracht sein. Eine solche Markierung kann beispielsweise einen alphanummerischen Code umfassen, der Daten zum Typ, zur Größe, zum Material, zum Herstelldatum und anderes mehr des Elastomereinsatzes 2 bereitstellt. Die Markierung kann auch mehrfach an der Stirnseite am zweiten Ende 2b des Elastomereinsatzes 2 vorgesehen sein, so dass die Daten auslesbar sind, falls eine Markierung ganz oder teilweise unleserlich ist.

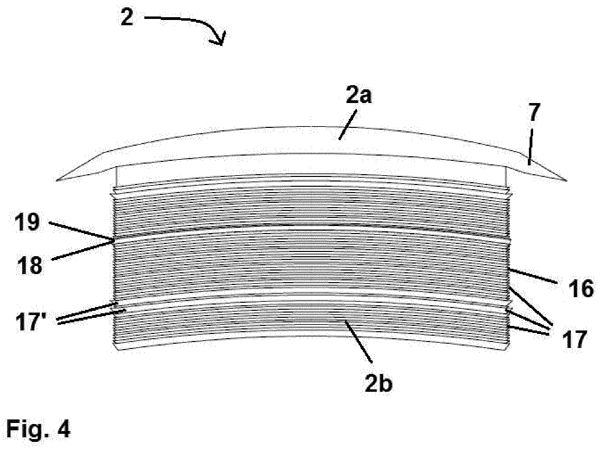

In der Fig. 4 ist in einer schematischen seitlichen Ansicht der Elastomereinsatz 2 aus Fig. 3 gezeigt.

Die Bezugszeichen in der Fig. 4 entsprechen denen aus der Fig. 3.

Der Elastomereinsatz 2 weist eine Außenoberfläche 16 in etwa in der Form einer Mantelfläche eines Zylinders auf. Darauf sind Erhebungen 17 ausgebildet, die dazu dienen, eine fluiddichte Anlage des Elastomereinsatzes 2 in einen Durchbruch des Hauptrohres, des Schachtes oder dergleichen, zu ermöglichen. Die Erhebungen 17 auf der Außenoberfläche 16 des Elastomereinsatzes 2 können dabei unterschiedlich sein, so sind die Erhebungen 17 auf der Außenoberfläche 16 des Elastomereinsatzes 2 teils als von der Außenoberfläche 16 hervortretende Kanten, teils als von der Außenoberfläche des Elastomereinsatzes 2 hervortretende Lippen ausgeformt. Insbesondere sind zwei etwa parallel zueinander angeordnete Dichtlippen 17' nahe des zweiten Endes 2b des Elastomereinsatzes 2 ausgeformt.

Die Anordnung der Erhebungen 17 an der Außenoberfläche16 des Elastomereinsatzes 2 repräsentieren einen Zylindermantelflächenabschnitt, der die Form des Zylindermantelflächenabschnitts am Durchbruch im Hauptrohr, am Schacht oder dergleichen, aufweist. Hierdurch resultiert eine verbesserte Anpressung der Erhebungen 17 an der Außenoberfläche16 des Elastomereinsatzes 2 an die Lochlaibung am Durchbruchs im Hauptrohr, am Schacht oder dergleichen, verbunden mit einer erhöhten Fluiddichtheit.

In einer Nut 18, die sich um den gesamten Umfang der Außenoberfläche 16 des Elastomereinsatzes 2 herumzieht, ist ein quellfähiges Dichtungsmaterial 19 angeordnet.

Am Elastomereinsatz 2 ist am ersten Ende 2a der Auflagekragen 7 ausgebildet.

Das zweite Ende 2b des Elastomereinsatzes 2 ist angefast, um den Elastomereinsatz 2 leichter in den Durchbruch des Hauptrohres, des Schachtes oder dergleichen, einführen zu können.

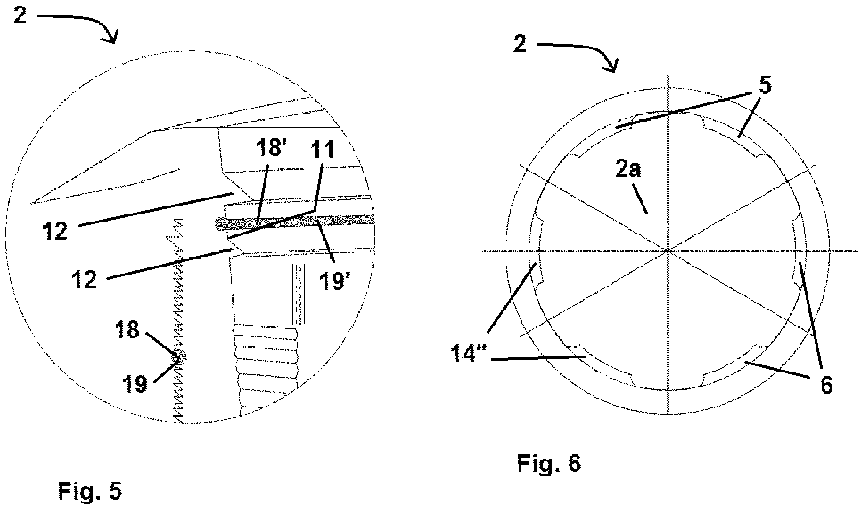

In der Fig. 5 ist eine schematische geschnittene seitliche Ansicht eines Details des Elastomereinsatzes aus Fig. 3 gezeigt.

Die Bezugszeichen in der Fig. 5 entsprechen denen aus den Fig. 3 und 4.

Am Elastomereinsatzes 2 ist eine Nut 18' vorgesehen, welche sich entlang des gesamten Innenumfangs erstreckt, und in der ein quellfähiges Dichtungsmaterial 19' aufgenommen ist.
Insbesondere kann vorgesehen sein, dass die Nut 18' zwischen den zwei Dichtlippen, die etwa parallel zueinander entlang des gesamtes Innenumfangs des Elastomereinsatzes 2 am Haltebereich 11 verlaufen, ausgebildet ist.

In der Fig. 6 ist eine schematische Aufsicht auf den Elastomereinsatz aus Fig. 3 gezeigt.

Die Bezugszeichen in der Fig. 6 entsprechen denen aus den vorangehenden Figuren 3 bis 5.

Bei der Fig. 6 blickt man vom ersten Ende 2a auf den Elastomereinsatz 2.

An der Innenoberfläche des Elastomereinsatzes 2 ist ein Innengewinde 5 in Form eines Bajonettgewindes 6 ausgebildet, welches einzelne Gewindeabschnitte 14" aufweist.

Bei der abgebildeten Ausführungsform der Erfindung sind 6 Gewindeabschnitte 14" ausgebildet. Diese sind symmetrisch mit gleichen Winkelabständen zu ihren direkten Nachbarn angeordnet.

Zwischen den Gewindeabschnitten 14" sind Freiräume ausgebildet, die dazu geeignet sind, dass die hier nicht gezeigten Gewindeabschnitte 14', die am Anschlussstutzen 3 ausgebildet sind, in diese Freiräume einsteckbar sind.

In einer anderen hier nicht gezeigten Ausführungsform der Erfindung sind mehrere Gewindeabschnitte 14', 14" am Elastomereinsatz 2 und am Anschlussstutzen 3 ausgebildet, wobei die Anzahl der Gewindeabschnitte 14', 14" am Elastomereinsatz 2 und am Anschlussstutzen 3 gleich ist. Vorteilhaft können dies 4, 5, 6, 7 oder 8 sein.

Wenn vorgesehen ist, dass die Gewindeabschnitte 14', 14" mit unterschiedlichen Winkelabständen zu ihren direkten Nachbarn angeordnet sind, wobei dies dann beim Elastomereinsatz 2 und beim Anschlussstutzen 3 gleichermaßen kongruent zueinander ausgeformt ist, kann der Anschlussstutzen 3 nur in einer Positionierung gegenüber dem Elastomereinsatz 2 in diesen eingesteckt werden, was die Sicherheit und Eindeutigkeit beim Zusammenbau von Anschlussstutzen 3 und Elastomereinsatz 2 zur Anschlussvorrichtung 1 erhöht und verbessert.

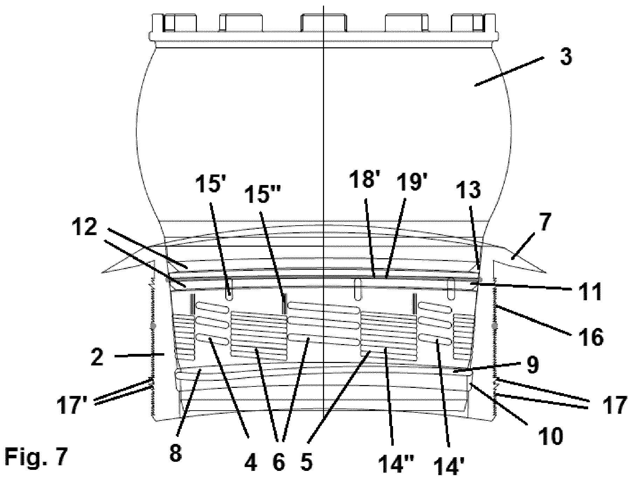

In der Fig. 7 ist in einer schematischen seitlichen geschnittenen Ansicht der Anschlussstutzen 3 gezeigt, der in den Elastomereinsatz 2 eingesteckt ist.

Die Bezugszeichen in der Fig. 7 entsprechen denen aus den vorangehenden Figuren.

Der Elastomereinsatz 2 ist in dem hier nicht gezeigten Durchbruch der Wandung des Hauptrohres, des Schachtes oder dergleichen, installiert.

Der Anschlussstutzen 3 ist daraufhin mit seinem zweiten Ende 3b derart in das erste Ende 2a des Elastomereinsatzes 2 eingesteckt, dass die Gewindeabschnitte 14' des Anschlussstutzens in die Freiräume zwischen den einzelnen Gewindeabschnitten 14" des Elastomereinsatzes eingeführt sind.

Für das installierende Personal ist es einfach, den Einsteckweg des Anschlussstutzens 3 in den Elastomereinsatz 2 richtig zu wählen, da der Vorsprung 9 in Form eines Wulstes am Endbereich 8 des Anschlussstutzens 3 in den Freiraum an der Dichtfläche 10 am Elastomereinsatz 2 eindringt, was nach einem anfänglichen Widerstand beim Einstecken dann spürbar "einschnappt".

Das Dichtmittel 12 in Form von zwei Lippen am Haltebereich 11 des Elastomereinsatzes 2 kommt dabei mit einem Dichtabschnitt 13 des Anschlussstutzens 3 in Kontakt. Ebenso kommt der Vorsprung 9 in Form eines Wulstes am Endbereich 8 des Anschlussstutzens 3 mit der Dichtfläche 10 am Elastomereinsatz 2 in Berührung.

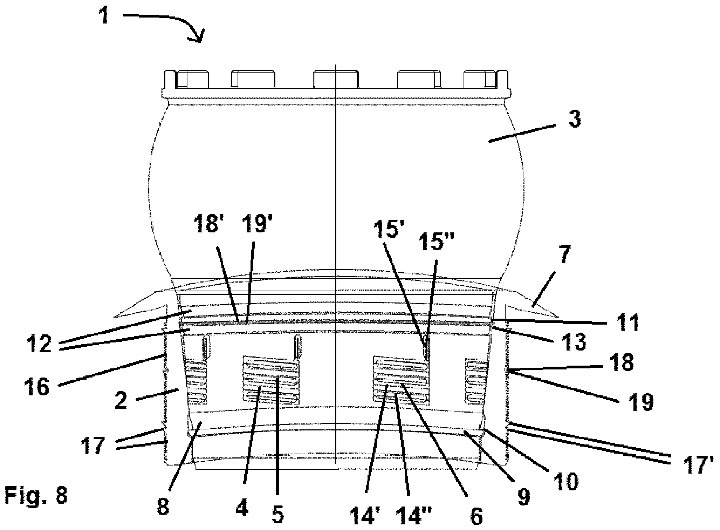

In der Fig. 8 ist in einer schematischen seitlichen geschnittenen Ansicht die Anschlussvorrichtung 1 gemäß vorliegender Erfindung gezeigt.

Die Bezugszeichen in der Fig. 8 entsprechen denen aus den vorangehenden Figuren.

Durch Drehung des Anschlussstutzens 3, beispielsweise unter Zuhilfenahme eines Werkzeugs, das an der Schraubkrone am ersten Ende 3a des Anschlussstutzens 3 angreift und mit dem die Drehbewegung ausführbar ist, wird ausgehend von der Positionierung des Anschlussstutzens 3 im Elastomereinsatz 2 gemäß Fig. 4 der Zustand, der in der Fig. 5 wiedergegeben ist, hergestellt.

Die Drehung des Anschlussstutzens 3 im feststehenden Elastomereinsatz 2 ist dabei derartig erfolgt, dass die Gewindeabschnitte 14', 14" von Anschlussstutzen 3 und Elastomereinsatz 2 ineinander eingreifen, bis der Drehweg durch die vorgesehenen Anschläge 15', 15" begrenzt ist, wenn diese aneinander anliegen. Die Einschraubendstellung ist so erreicht.

Hilfreich können dabei auch die hier nicht gezeigten Markierungen oder Informationselemente am Elastomereinsatz 2 und am Anschlussstutzen 3 sein, die eine Information für das installierende Personal bereitstellen, wie ein sachgerechter Zusammenbau zur Anschlussvorrichtung 1 stattzufinden hat.

Durch das Eingreifen der Gewindegänge der Gewindeabschnitte 14', 14" am Anschlussstutzen 3 und am Elastomereinsatz 2 wird der Anschlussstutzen 3 in den Elastomereinsatz 2 eingeschraubt, sodass es auf Grund des konischen Abschnittes der Außenoberfläche des Anschlussstutzens 3 zu einer Verpressung und damit fluiddichten Anlage des Dichtmittels 12 in Form von zwei Lippen, die am Haltebereich 11 des Elastomereinsatzes 2 ausgebildet sind, mit dem korrespondierenden Dichtabschnitt 13 am Anschlussstutzen 3 kommt.

Weiterhin ist durch die Konizität des Abschnittes des Anschlussstutzens 3 eine Verpressung des Vorsprungs 9 in Form eines Wulstes am Endbereich 8 des Anschlussstutzens 3 mit der Dichtfläche 10 am Elastomereinsatz 2 erfolgt, sodass auch dort eine fluiddichte Anlage des Vorsprungs 9 in Form eines Wulstes an der Dichtfläche 10 vorliegt.

Durch die Konizität des Abschnittes des Anschlussstutzens 3 kommt es beim Einschrauben des Anschlussstutzens 3 in den Elastomereinsatz 2 auch zu einer Anpressung der Außenoberfläche 16 des Elastomereinsatzes 2 gegen den Abschnitt der Wandung im Durchbruch im Hauptrohr, im Schacht oder dergleichen, an dem diese Außenoberfläche 16 anliegt.

Sehr hilfreich zur Schaffung einer dichtend wirkenden Anlage der Außenoberfläche 16 des Elastomereinsatzes 2 gegen den Abschnitt der Wandung im Durchbruch erweisen sich dabei die Erhebungen 17, die an der Außenoberfläche 16 des Elastomereinsatzes 2 ausgebildet sind. Insbesondere die zwei Dichtlippen 17' an der Außenoberfläche 16 des Elastomereinsatzes 2 werden durch den Vorsprung 9 in Form eines Wulstes am Endbereich 8 des Anschlussstutzens 3, der den Dichtlippen 17' an der Innenoberfläche des Elastomereinsatzes 2 etwa gegenüberliegend angeordnet ist, gegen die Wandung im Durchbruch im Hauptrohr, im Schacht oder dergleichen, gepresst und erhöhen die Fluiddichtheit in diesem Bereich.
In der Fig. 8 ist nicht gezeigt, dass die Außenoberfläche 16 des Elastomereinsatzes 2 an der Wand im Durchbruch des Hauptrohres, des Schachtes oder dergleichen, anliegt.
In das erste Ende 3a des Anschlussstutzens 3 ist das hier nicht gezeigte Nebenrohr angeschlossen, sodass eine fluiddichte Verbindung des Nebenrohres mit dem Hauptrohr, dem Schacht oder dergleichen, via der erfindungsgemäßen Anschlussvorrichtung 1 hergestellt ist. Auf diese Weise kann Fluid vom Nebenrohr zum Hauptrohr, dem Schacht oder dergleichen, geleitet werden.
Sollte sich eine unerwünschten Spaltbildung zwischen dem Elastomereinsatz 2 und der Wand des Durchbruches des Hauptrohres, des Schachtes oder dergleichen, einstellen, so kann in diesen Spalt eindringendes Wasser das quellfähige Dichtungsmaterial 19 in der Nut 18 an der Außenoberfläche 16 des Elastomereinsatzes 2 aktivieren, welches aufquillt und nachträglich abdichtet.
Somit kann mit der erfindungsgemäßen Anschlussvorrichtung 1 in einfacher Weise eine fluiddichte Verbindung zwischen einem Nebenrohr und einem Hauptrohr, einem Schacht, oder dergleichen, mit einfachem und geringem Arbeitsumfang und unter hoher Fluiddichtheit hergestellt werden.

### Bezugszeichen

- 1: Anschlussvorrichtung
- 2: Elastomereinsatz
- 2a: erstes Ende
- 2b: zweites Ende
- 3: Anschlussstutzen
- 3a: erstes Ende
- 3b: zweites Ende
- 4: Außengewinde
- 5: Innengewinde
- 6: Bajonettgewinde
- 7: Auflagekragen
- 8: Endbereich
- 9: Vorsprung
- 10: Dichtfläche
- 11: Haltebereich
- 12: Dichtmittel
- 13: Dichtabschnitt
- 14': Gewindeabschnitt
- 14": Gewindeabschnitt
- 15': Anschlag
- 15": Anschlag
- 16: Außenoberfläche
- 17: Erhebung
- 17': Dichtlippe
- 18: Nut
- 18': Nut
- 19: quellfähiges Dichtungsmaterial
- 19': quellfähiges Dichtungsmaterial
- 20: Fluidaufnahme-, -speicher- und -leitsystem

## Patentansprüche

1. Anschlussvorrichtung (1) für eine Nebenrohrleitung an einer Hauptrohrleitung, einem Schacht oder dergleichen, welche einen Durchbruch in der Wandung aufweist, umfassend einen Elastomereinsatz (2) und einen Anschlussstutzen (3), der nach Installation des Elastomereinsatzes (2) in dem Durchbruch der Wandung der Hauptrohrleitung, des Schachtes oder dergleichen, in diesen bis zum Erreichen einer Endstellung einschraubbar ist und an dem die Nebenrohrleitung anschließbar ist, so dass eine fluiddichte Verbindung zwischen der Hauptrohrleitung, dem Schacht oder dergleichen, und der Nebenrohrleitung herstellbar ist, wobei zum Einschrauben des Anschlussstutzens (3) in den Elastomereinsatz (2) ein Außengewinde (4) am Anschlussstutzen (3) und ein Innengewinde (5) am Elastomereinsatz (2) ausgebildet ist, wobei der Elastomereinsatz (2) einen Auflagekragen (7) aufweist, der die Form eines Zylindermantelflächenabschnitts besitzt, und wobei am Elastomereinsatz (2) ein Haltebereich (11) ausgebildet ist, wobei der Haltebereich (11) des Elastomereinsatzes (2) an seinem Innenumfang wenigstens ein umlaufendes Dichtmittel (12) aufweist, das in der Einschraubendstellung mit einem Dichtabschnitt (13) des Anschlussstutzens (3) dichtend in Berührung steht,
**dadurch gekennzeichnet,**
**dass** das Außengewinde (4) am Anschlussstutzen (3) und das Innengewinde (5) am Elastomereinsatz (2) als Bajonettgewinde (6) geformt sind, die bei gegenseitigem Eingriff bei einer Drehung um einen Winkel zwischen 12.5° und 45° die Endstellung erreichen, und
**dass** am Anschlussstutzen (3) ein Endbereich (8) ausgebildet ist, wobei der Endbereich (8) des Anschlussstutzens (3) an seinem Außenumfang einen umlaufenden Vorsprung (9) aufweist, der in der Einschraubendstellung mit einer Dichtfläche (10) des Elastomereinsatzes (2) dichtend in Berührung steht.

2. Anschlussvorrichtung (1) nach Anspruch 1, **dadurch gekennzeichnet, dass** am Elastomereinsatz (2) und am Anschlussstutzen (3) das Bajonettgewinde (6) in Form einer Mehrzahl von Gewindeabschnitten (14', 14") ausgebildet ist, wobei eine Anzahl von 4, 5, 6, 7 oder 8 bevorzugt ist.

3. Anschlussvorrichtung (1) nach Anspruch 1 oder 2, **dadurch gekennzeichnet, dass** am Elastomereinsatz (2) und / oder am Anschlussstutzen (3) ein Anschlag (15', 15") ausgebildet ist, der den Einschraubweg des Anschlussstutzens (3) in den Elastomereinsatz (2) begrenzt und die Einschraubendstellung des Anschlussstutzens (3) im Elastomereinsatz (2) definiert.

4. Anschlussvorrichtung (1) nach einem der vorangehenden Ansprüche, **dadurch gekennzeichnet, dass** das am Haltebereich (11) des Elastomereinsatzes (2) vorgesehene Dichtmittel (12) eine Dichtlippe oder eine Mehrzahl von Dichtlippen, und / oder ein Dichtwulst oder eine Mehrzahl von Dichtwülsten ist.

5. Anschlussvorrichtung (1) nach einem der vorangehenden Ansprüche, **dadurch gekennzeichnet, dass** der am Endbereich (8) des Anschlussstutzens (3) vorgesehene umlaufende Vorsprung (9) als Wulst oder als Kante ausgebildet ist.

6. Anschlussvorrichtung (1) nach einem der vorangehenden Ansprüche, **dadurch gekennzeichnet, dass** an der Außenoberfläche (16) und / oder am Haltebereich (11) des Elastomereinsatzes (2) wenigstens eine Nut (18) vorgesehen ist, in der ein quellfähiges Dichtungsmaterial (19) aufgenommen ist.

7. Anschlussvorrichtung (1) nach einem der vorangehenden Ansprüche, **dadurch gekennzeichnet, dass** am Elastomereinsatz (2) und am Anschlussstutzen (3) Markierungen oder Informationselemente vorgesehen sind, die Informationen bereitstellen, wie der Elastomereinsatz (2) und der Anschlussstutzen (3) zusammenzufügen und durch Schrauben zu verbinden sind, und ob die Einschraubendstellung beim Schrauben erreicht ist.

8. Anschlussvorrichtung (1) nach einem der vorangehenden Ansprüche, **dadurch gekennzeichnet, dass** der Elastomereinsatz (2) ein Elastomer enthält oder aus einem Elastomer besteht, wobei das Elastomer ausgewählt ist aus einem Gummi, einem Kautschuk, einem Thermoplastischen Elastomer (TPE), einem Styrol-Butadien-Kautschuk (SBR), einem Nitril-Butadien-Kautschuk (NBR), oder einem Ethylen-Propylen-Dien-Kautschuk (EPDM).

9. Anschlussvorrichtung (1) nach einem der vorangehenden Ansprüche, **dadurch gekennzeichnet, dass** der Anschlussstutzen (3) ein Polymermaterial enthält oder aus einem Polymermaterial besteht, wobei das Polymermaterial bevorzugt ein Thermoplast ist, besonders bevorzugt ein Polyolefin oder eine Polyvinylchlorid oder ein Polyamid, und ganz besonders bevorzugt ein Polypropylen, ein Polyethylen oder ein Polybutylen oder ein Copolymeres oder eine Mischzusammensetzung der Vorgenannten.

10. Fluidaufnahme-, -speicher- und -leitsystem (20) mit wenigstens einer Anschlussvorrichtung (1) nach einem der Ansprüche 1 bis 9.

## Claims

1. A connecting device (1) for a secondary pipe on a main pipe, a shaft or the like, which has an opening in the wall, comprising an elastomer insert (2) and a connecting piece (3) which, after the elastomer insert (2) has been installed in the opening of the wall of the main pipe, shaft or the like, can be screwed into the same until it reaches an end position, and to which the secondary pipe can be connected such that a fluid-tight connection can be made between the main pipe, shaft or the like and the secondary pipe, wherein for screwing the connecting piece (3) into the elastomer insert (2) an external thread (4) is formed on the connecting piece (3) and an internal thread (5) is formed on the elastomer insert (2), wherein the elastomer insert (2) has a support collar (7) which has the shape of a cylindrical surface section, and wherein a retaining region (11) is formed on the elastomer insert (2), wherein the retaining region (11) of the elastomer insert (2) has on its inner circumference at least one circumferential sealing means (12), which is in sealing contact with a sealing section (13) of the connecting piece (3) in the screwed-in end position,
**characterised in that**
the external thread (4) on the connecting piece (3) and the internal thread (5) on the elastomer insert (2) are formed as a bayonet thread (6), which when mutually engaged reach the end position when rotated by an angle of between 12.5° and 45°, and
**in that** an end region (8) is formed on the connecting piece (3), wherein the end region (8) of the connecting piece (3) has on its outer circumference a circumferential projection (9) which is in sealing contact with a sealing surface (10) of the elastomer insert (2) in the screwed-in end position.

2. The connecting device (1) according to claim 1, **characterised in that** on the elastomer insert (2) and the connecting piece (3) the bayonet thread (6) is configured in the form of a plurality of threaded sections (14', 14"), a number of 4, 5, 6, 7 or 8 being preferred.

3. The connecting device (1) according to claim 1 or 2, **characterised in that** on the elastomer insert (2) and/or on the connecting piece (3) a stop (15', 15") is formed, which limits the screw-in path of the connecting piece (3) into the elastomer insert (2) and defines the screwed-in end position of the connecting piece (3) in the elastomer insert (2).

4. The connecting device (1) according to one of the preceding claims, **characterised in that** the sealing means (12) provided on the retaining region (11) of the elastomer insert (2) is a sealing lip or a plurality of sealing lips, and/or a sealing bead or a plurality of sealing beads.

5. The connecting device (1) according to one of the preceding claims, **characterised in that** the circumferential projection (9) provided on the end region (8) of the connecting piece (3) is formed as a bead or as an edge.

6. The connecting device (1) according to one of the preceding claims, **characterised in that** on the outer surface (16) and/or on the retaining region (11) of the elastomer insert (2) at least one groove (18) is provided, in which a swellable sealing material (19) is accommodated.

7. The connecting device (1) according to one of the preceding claims, **characterised in that** on the elastomer insert (2) and the connecting piece (3) markings or information elements are provided which give information on how the elastomer insert (2) and the connecting piece (3) are to be joined together and connected by screwing, and whether the screwed-in end position has been reached when screwing.

8. The connecting device (1) according to one of the preceding claims, **characterised in that** the elastomer insert (2) contains or consists of an elastomer, the elastomer being selected from a vulcanised rubber, an unvulcanised rubber, a thermoplastic elastomer (TPE), a styrene-butadiene rubber (SBR), a nitrile-butadiene rubber (NBR) or an ethylene-propylene-diene rubber (EPDM).

9. The connecting device (1) according to one of the preceding claims, **characterised in that** the connecting piece (3) contains or consists of a polymer material, the polymer material preferably being a thermoplastic, particularly preferably a polyolefin or a polyvinyl chloride or a polyamide and most preferably a polypropylene, a polyethylene or a polybutylene or a copolymer or a blend composition of the foregoing.

10. A fluid-receiving, fluid-storage and fluid-conveying system (20) having at least one connecting device (1) according to one of claims 1 to 9.

## Revendications

1. Dispositif de raccordement (1) pour un conduit tubulaire secondaire à un conduit tubulaire principal, un puits ou similaire, lequel présente une percée dans la paroi, comprenant un insert en élastomère (2) et une tubulure de raccordement (3), qui peut être vissée, après l'installation de l'insert en élastomère (2) dans la percée de la paroi du conduit tubulaire principal, du puits ou similaire, dans celle-ci jusqu'à atteindre une position finale et à laquelle le conduit tubulaire secondaire peut être raccordé si bien qu'une liaison étanche aux fluides peut être établie entre le conduit tubulaire principal, le puits ou similaire, et le conduit tubulaire secondaire, dans lequel pour visser la tubulure de raccordement (3) dans l'insert en élastomère (2), un filetage extérieur (4) est réalisé au niveau de la tubulure de raccordement (3) et un filetage intérieur (5) est réalisé au niveau de l'insert en élastomère (2), dans lequel l'insert en élastomère (2) présente un rebord de support (7), qui possède la forme d'une section de face d'enveloppe cylindrique, et dans lequel une zone de maintien (11) est réalisée au niveau de l'insert en élastomère (2), dans lequel la zone de maintien (11) de l'insert en élastomère (2) présente au niveau de sa périphérie intérieure au moins un moyen d'étanchéité (12) périphérique, qui se trouve en contact étanche dans la position finale de vissage avec une section d'étanchéité (13) de la tubulure de raccordement (3),
**caractérisé en ce**
**que** le filetage extérieur (4) est façonné au niveau de la tubulure de raccordement (3) et le filetage intérieur (5) est façonné au niveau de l'insert en élastomère (2) sous la forme d'un filetage à baïonnette (6), lesquels atteignent, lors d'une prise mutuelle, lors d'une rotation autour d'un angle entre 12,5° et 45°, la position finale, et
**qu'**une zone d'extrémité (8) est réalisée au niveau de la tubulure de raccordement (3), dans lequel la zone d'extrémité (8) de la tubulure de raccordement (3) présente au niveau de sa périphérie extérieure une partie faisant saillie (9) périphérique, qui se trouve en contact étanche dans la position finale de vissage avec une face d'étanchéité (10) de l'insert en élastomère (2).

2. Dispositif de raccordement (1) selon la revendication 1, **caractérisé en ce que** le filetage à baïonnette (6) est réalisé sous la forme d'une multitude de sections filetées (14', 14") au niveau de l'insert en élastomère (2) et au niveau de la tubulure de raccordement (3), dans lequel un nombre de 4, 5, 6, 7 ou 8 est préféré.

3. Dispositif de raccordement (1) selon la revendication 1 ou 2, **caractérisé en ce qu'**est réalisée au niveau de l'insert en élastomère (2) et/ou au niveau de la tubulure de raccordement (3) une butée (15', 15"), qui délimite le trajet de vissage de la tubulure de raccordement (3) dans l'insert en élastomère (2) et définit la position finale de vissage de la tubulure de raccordement (3) dans l'insert en élastomère (2).

4. Dispositif de raccordement (1) selon l'une quelconque des revendications précédentes, **caractérisé en ce que** le moyen d'étanchéité (12) prévu au niveau de la zone de maintien (11) de l'insert en élastomère (2) est une lèvre d'étanchéité ou une multitude de lèvres d'étanchéité et/ou un bourrelet d'étanchéité ou une multitude de bourrelets d'étanchéité.

5. Dispositif de raccordement (1) selon l'une quelconque des revendications précédentes, **caractérisé en ce que** la partie faisant saillie (9) périphérique prévue au niveau de la zone d'extrémité (8) de la tubulure de raccordement (3) est réalisée sous la forme d'un bourrelet ou sous la forme d'une arête.

6. Dispositif de raccordement (1) selon l'une quelconque des revendications précédentes, **caractérisé en ce qu'**est prévue, au niveau de la surface extérieure (16) et/ou au niveau de la zone de maintien (11) de l'insert en élastomère (2), au moins une rainure (18), dans laquelle un matériau d'étanchéité (19) pouvant gonfler est prévu.

7. Dispositif de raccordement (1) selon l'une quelconque des revendications précédentes, **caractérisé en ce que** sont prévus au niveau de l'insert en élastomère (2) et au niveau de la tubulure de raccordement (3) des marquages ou des éléments d'information, qui fournissent des informations sur la manière selon laquelle l'insert en élastomère (2) et la tubulure de raccordement (3) sont à assembler et à relier par des vis et sur la question de savoir si la position finale de vissage est atteinte lors du vissage.

8. Dispositif de raccordement (1) selon l'une quelconque des revendications précédentes, **caractérisé en ce que** l'insert en élastomère (2) contient un élastomère ou est constitué d'un élastomère, dans lequel l'élastomère est choisi parmi une gomme, un caoutchouc, un élastomère thermoplastique (TPE), un caoutchouc styrène-butadiène (SBR), un caoutchouc nitrile-butadiène (NBR) ou un caoutchouc éthylène-propylène-diène (EPDM).

9. Dispositif de raccordement (1) selon l'une quelconque des revendications précédentes, **caractérisé en ce que** la tubulure de raccordement (3) contient un matériau polymère ou est constituée d'un matériau polymère, dans lequel le matériau polymère est de manière préférée une matière thermoplastique, de manière particulièrement préférée une polyoléfine ou un polychlorure de vinyle ou un polyamide, et de manière très particulièrement préférée un polypropylène, un polyéthylène ou un polybutylène ou un copolymère ou une composition mixte des éléments susmentionnés.

10. Système de réception, de stockage et d'acheminement de fluide (20) avec au moins un dispositif de raccordement (1) selon l'une quelconque des revendications 1 à 9.
